(19) Europäisches Patentamt
European Patent Office
Office européen des brevets

(11) **EP 3 432 094 A1**

(12) **EUROPEAN PATENT APPLICATION**

(43) Date of publication:
**23.01.2019 Bulletin 2019/04**

(51) Int Cl.:
**G05B 17/02** *(2006.01)*  **G05B 23/02** *(2006.01)*

(21) Application number: **17182315.6**

(22) Date of filing: **20.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft 80333 München (DE)**

(72) Inventors:
• **Allmaras, Moritz**
  **81673 München (DE)**
• **Bergs, Christoph**
  **76275 Ettlingen (DE)**
• **Hartmann, Dirk**
  **85617 Aßling (DE)**
• **Obst, Birgit**
  **80935 München (DE)**

Remarks:
Amended claims in accordance with Rule 137(2) EPC.

(54) **SYSTEM STATE PREDICTION**

(57)  A method comprises the following steps: observing a first state vector comprising state variables in a physical system A; determining a first prediction vector based on the first state vector, with a data driven model for system A; determining a second prediction vector based on the first state vector, with a physics based model for system A; training a prediction fusion operator to determine a third prediction vector based on the first and second prediction vectors; validating the prediction fusion operator on the third prediction vector and another first state vector, the other first state vector concerning the same time as the third prediction vector.

## FIG 2

$$\hat{x}_k = \begin{bmatrix} x_1\ (k) \\ x_2\ (k) \end{bmatrix}$$

$$D_A\ (\hat{x}_k) + w_A^D \quad (205)$$

$$y_A^D = \begin{bmatrix} y_{A1}\ (k+1) \\ y_{A2}\ (k+1) \end{bmatrix}$$

$$P_A\ (\hat{x}_k) + w_A^P \quad (210)$$

$$y_A^P = \begin{bmatrix} y_{A1}\ (k+1) \\ y_{A2}\ (k+1) \\ y_{A3}\ (k+1) \\ y_{A4}\ (k+1) \end{bmatrix}$$

$$\gamma \quad (135)$$

$$y_A = \begin{bmatrix} y_{A1}\ (k+1) \\ y_{A2}\ (k+1) \\ y_{A3}\ (k+1) \\ y_{A4}\ (k+1) \end{bmatrix}$$

EP 3 432 094 A1

FIG 3

$$\hat{x}_k = \begin{bmatrix} x_1 \ (k) \\ x_2 \ (k) \end{bmatrix}$$

310

$$D_B \ (\hat{x}_k) + w_B^D$$

$$y_A^D = \begin{bmatrix} y_{B1} \ (k+1) \\ y_{B2} \ (k+1) \end{bmatrix}$$

$$y_A^P = \begin{bmatrix} y_{A1} \ (k+1) \\ y_{A2} \ (k+1) \\ y_{A3} \ (k+1) \\ y_{A4} \ (k+1) \end{bmatrix}$$

305

135

$$\gamma$$

$$\hat{y}_B = \begin{bmatrix} y_{B1} \ (k+1) \\ y_{B2} \ (k+1) \\ y_{B3} \ (k+1) \\ y_{B4} \ (k+1) \end{bmatrix}$$

## Description

Present invention concerns a technique for predicting system behaviour of a physical system. More specifically present invention concerns the transfer of parameter prediction between similar systems.

Background of the Invention

To improve business intelligence and smart services, more and more sensors are employed to pick up data from systems that need observation. Nevertheless regarding a product portfolio, there are locations of interest for monitoring and control, especially critical hot spots, where no measurement, thus no sensor data, is available. Recently mathematical model based approaches using physical behaviour calculation of the underlying process in parallel to operation linked with current system conditions, are able to generate additional information at any location, especially at critical locations of interest.

One specific application is the monitoring of temperatures in electric motors, especially the temperature distribution of the pole shoes. Since the pole shoes are part of the rotor side, sensors for direct temperature measurements at the pole shoes cannot be placed in production devices due to high associated cost. Hence, a simulation model for calculation of these current temperatures under operational conditions is set up.

These online physics based simulation models are very helpful for additional soft sensors in condition monitoring and operational strategy recommendation, as well as for data analytics in load and life time prediction regarding maintenance services. But the development of such calculation modules is based on detailed 3D geometry models of specific product components, effort intensive and therefore hard to scale or applicable for fleets with high number of individual configured product types (e.g. electrical motors) with individual physical behaviour and individual environmental conditions in the field.

Present invention therefore sets out to provide an improved technique for predicting behaviour of a physical system. The invention solves the problem by the subject matter described in enclosed independent claims. Dependent claims give preferred embodiments.

Disclosure of the Invention

A first method comprises the following steps: observing a first state vector comprising state variables in a physical system A; determining a first prediction vector based on the first state vector, with a data driven model for system A; determining a second prediction vector based on the first state vector, with a physics based model for system A; training a prediction fusion operator to determine a third prediction vector based on the first and second prediction vectors; validating the prediction fusion operator on the third prediction vector and another first state vector, the other first state vector concerning the same time as the third prediction vector.

The employed mathematical model is generally based on physical system behaviour and numerically simulated in time, starting from a known initial state and using given system inputs. Physics based models are currently only available for specific product types. The monitored outputs may be available for any location but deriving a model that covers all relevant behaviour of a real world system with respect to the intended application can be a challenging problem. Model based prediction leak in accuracy due to absent environmental influence recognition.

The data based machine learning technique may work with measurements collected from the real system, predicting the system output with given inputs. Data based approaches may be mighty in scalability for available sensor data, but leak in predictive information where no measurement is available. They can generally only predict behaviour that can be directly observed in real systems. Any part of the system state that is not observed through outputs cannot be targeted by data-driven methods. Data based prediction leak in accuracy due to unexpected dynamic system behaviours.

With the prediction fusion operator the predictions of both the physical model and the data driven model can be combined in such a way that the provided state predictions are more reliable or more precise. The prediction fusion operator may be realized for instance as a neural network or any other system that is able to improve its own forecast based on the feedback information how good a prediction turned out to be later on. There is no theoretical limit for the amount of data that can be used to train and validate the prediction fusion operator on system A. For asset analytics and fleet management the data collection over many assets / products / components running in the field may provide necessary information regarding customer services and maintenance activities.

A second method comprises the following steps: observing a second state vector comprising state variables in a physical system B which is different from but similar to a physical system A; determining a fourth prediction vector based on the second state vector, with a data driven model for system B; determining a sixth prediction vector based on the second state vector, with a surrogate of the physics based model; and determining a fifth prediction vector based on the fourth and sixth prediction vectors, with a prediction fusion operator that is based on the system A.

The second method allows to use the lessons learned on system A to make an improved forecast for system B. While training the prediction fusion operator on system A may require a lot of effort in terms of training time or provision of training data, transfer of the prediction fusion operator to system B can be done with little effort. The prediction fusion operator can be small in size. Key information of a corresponding neural network may routinely amount to a few 100 kByte. This allows to perform frequent updating of the prediction fusion operator, such as to enforce propagation of newly learned system behaviour on system A to system B.

To facilitate the use of the prediction fusion operator trained on system A on system B, it is preferred that the prediction fusion operator allows for some adaption. In one embodiment it may therefore operate not directly on absolute input and output values but rather on a probability distribution of the respective value.

In one embodiment the second method further comprises determining a sixth prediction vector based on the second state vector, with a physical model for system B; wherein the fifth prediction vector is determined on the additional basis of the sixth prediction vector.

In other words the prediction in system B can be performed based on a combination of the prediction fusion operator and the data driven model together with a surrogate of the physical system. By adding the physical model certain differences between systems A and B may be better accounted for.

The first prediction vector and the fourth prediction vector may comprise the same state variables. That is, it is preferred that the prediction vector and the fourth prediction vector share a subset of state variables. The larger this common subset is in relation to one of the vectors, the more similar the two systems A and B may be.

System A must be physical in order for the physical model to make sense. System B must be physical so that it may considered similar to system A. Use of the physical model for system B may be an additional indication that system B is physical. Systems A and B may for instance each represent a mechanism for carrying out a predetermined technical process or a motor.

It is preferred that systems A and B comprise mass producible items of different production series. This emphasizes that both systems are physical in nature and ensures similarity between them. In one especially preferred embodiment systems A and B each comprise an electric motor. The electric motors may follow the same overall concept, i.e. comprise asynchronous motors, and be producible in different designs and sizes. Two such motors may be considered similar to each other if their sizes (in terms of maximum power) do not differ more than a other predetermined threshold, 100% for example. They may also be considered similar if they do not differ too much in design. Design differences may comprise the number of pole pairs and the two may be similar if they differ over no more than 25% in the pole pairs. A weighted combination value between size and design may be used to determine presence of similarity.

A first apparatus comprises a first interface for accepting state variables of a physical system A; and processing means for carrying out the first method described above in one of its variants. A second apparatus comprises a second interface for accepting state variables of a physical system B; and processing means for carrying out the second method described above in one of its variants.

The invention may provide model based condition monitoring not only for a few examples with specific simulation but transferable for other configurations within the same characteristics class. With condition based monitoring of this additional information also additional services regarding stress, life time prediction and product evolution for coming generation design may be possible. Holistic monitoring models may be achieved for product portfolio, compensating weaknesses of separated models and getting more accurate and reliable prediction of system behaviour and life time.

The above described method may each be carried out, completely or in part, by a computer system. To this ends, the method in question may be formulated as a computer program product with program code means. Each of the above described apparatuses may comprise a computer system that is adapted to carry out the corresponding method. Advantages or features of each method may apply to the corresponding method and vice versa. It is generally preferred that both methods are run on different apparatuses, wherein each apparatus is dedicated to one of the systems A and B.

Brief Summary of the Enclosed Figures

The above-described properties, features and advantages of present invention as well as the way they are achieved will be made clearer and better understandable in the light of the following discussion, making reference to exemplary embodiments shown in accompanying figures, in which

Fig. 1    shows two exemplary physical systems;
Fig. 2    shows determination of a prediction fusion operator on a first system;
Fig. 3    shows using a foreign prediction fusion operator on a second system;
Fig. 4    shows a flow chart of a first method for determining a prediction fusion operator; and
Fig. 5    shows a flow chart of a second method for using a foreign prediction fusion operator.

Detailed Exemplary Embodiments of the Invention

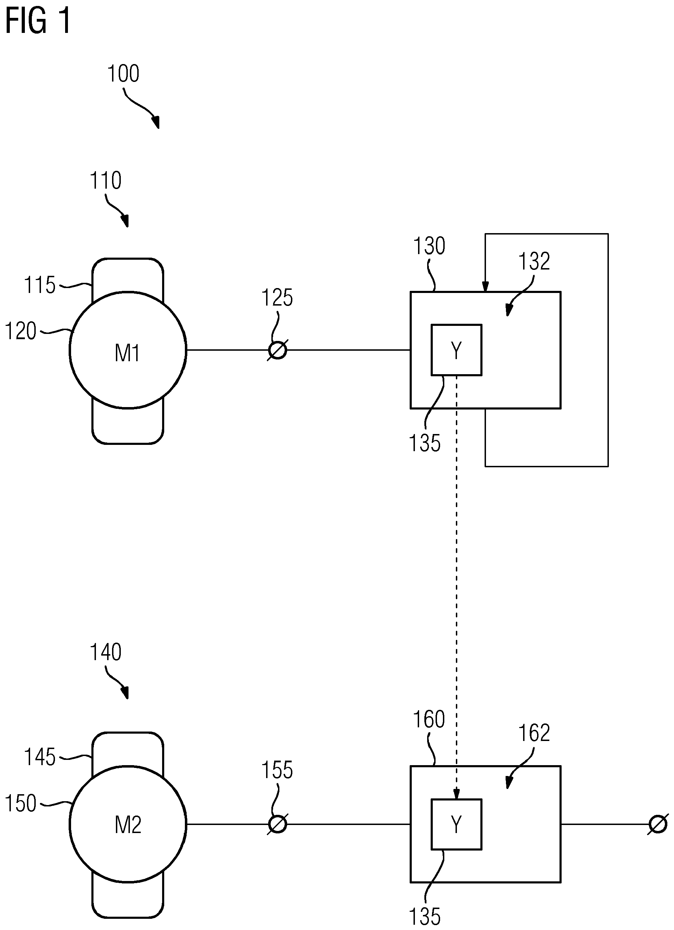

Figure 1 shows a schematic depiction 100 of two similar exemplary physical systems. A first system 110 and a second system 140 are each represented by exemplary asynchronous electric motors, although the invention is not limited to electric machinery. The electric motor 110, 140 may be large drive motors for elevators, belt conveyors or sewage pumps, with a power declaration in the range of up to several 100 kW. The first motor 110 comprises a first stator 115 and a first rotor 120 and the second motor 140 comprises a second stator 145 and a second rotor 150.

The motors 110, 140 may be mass producible items which may come in different product lines and power declarations. The product lines may differ in the number of pole pairs a motor 110, 140 has. The motors 110, 140 are considered similar as long as they stem from the same motor design and differ only in product line and/or power declaration (i.e. size). When a motor 110, 140 is connected to a power supply the rotating speed of the rotor 120, 150 differs from the frequency of the driving electrical power. Under conditions of large slippage the efficiency of the asynchronous motor 110, 140 is low and a large portion of the absorbed electric energy is transformed into heat which builds up mainly on the side of the rotor 120, 150, especially on pole shoes of the rotor 120, 150. A temperature distribution of the pole shoe needs monitoring so that overheating may be prevented. It is however difficult to measure the temperature directly on the moving rotor 120, 150 and transfer the result to the resting stator 115, 145. For this reason simulation models for calculation of these temperatures under operational conditions is set up.

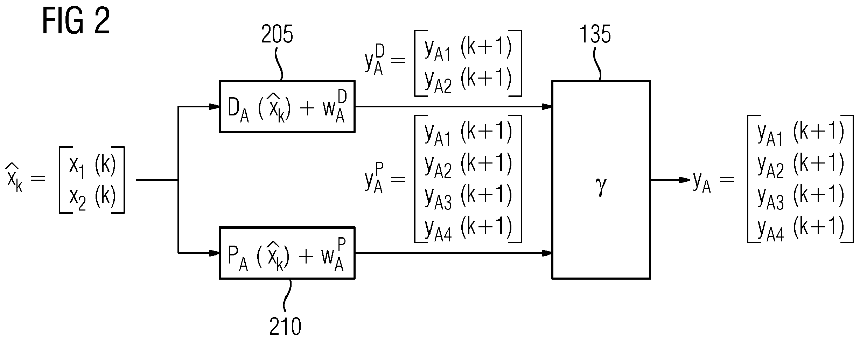

Via a first interface 125, a first apparatus 130 with first processing means 132 is connected to one or more sensors for monitoring conditions of the first electrical motor 110, like a temperature in a predetermined position, a rotating speed, a provided torque or an electric current. The first processing means 132 may especially comprise a programmable microcomputer or microcontroller. As will be shown below with reference to figure 2 in more detail, the first apparatus 130 is adapted to accept a first state vector comprising state variables (i.e. measurements) of the first motor 110 and make a prediction for that vector. The difference between the prediction and the actual values as they are observable later in time is fed back into the apparatus 130 and the model internal to apparatus 130 is adapted such that a successive prediction may be done with better precision. A crucial part of the model in first apparatus 130 is a prediction fusion operator 135 that may comprise a neural network that is adapted to perform the above-mentioned learning. The neural network may have a predetermined organisation that may comprise different layers, each with a predetermined number of neurons, and a parameter to each neuron. Thus, the prediction fusion operator 135 may be fully describable through its organisation and parameter set.

The second motor 140 is connected via a second interface 155 to a second apparatus 160 with processing means 162 which is adapted to one or more sensors on the second electric motor 140 as described above. The second processing means 162 may especially comprise a programmable microcomputer or microcontroller. The second apparatus 160 is adapted to accept the prediction fusion operator 135 from the first apparatus 130 and use it for making a prediction for a state vector received over the second interface 155. A prediction result, comprising one or more predicted state variables, may be output via an output interface 165.

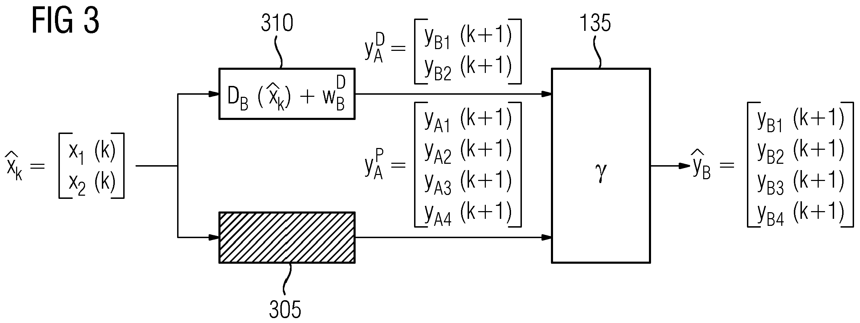

As will be explained below with reference to figure 3 with more detail, the models used in apparatuses 130 and 160 may differ from each other and the state vectors of the motors 110 and 140 may not comprise the same values. It is proposed that the state vector of the second motor 140 comprises less state variables than the state vector of the first motor 110. It is especially proposed that the first state vector allows full observation of all parameters of the first motor 110 while the second state vector comprises only a subset of these parameters. Prominently, a pole shoe temperature reading may be present in the first state vector but missing in the second.

Figure 2 shows a schematic representation of how a prediction fusion operator 135 is generated on a system like the first system 110 from figure 1. The representation may be understood as a flow diagram of a method or as functional components of first apparatus 130. It comprises a data driven model 205 and a physical model 210.

The focus of present invention is based on the combination of observational state variables, on the one hand provided by instrumentation via data model 205, on the other hand estimated by physical model 210. With a cooperative integration approach a combined monitoring model (full observation available for all necessary locations or for all necessary physical indicators) of a specific product with specific characteristics could be transferred to an incomplete model (no full observation available for necessary locations or for necessary physical indicators) of a similar product and make that monitoring model complete. With this transfer function it may be possible to also scale the information generated by physical simulation models to fleets and achieve holistic monitoring models for product portfolio, compensating weakness of separated models and getting more accurate and reliable prediction of system behaviour and life time. This approach should be explained through the following equations. The following preconditions are mandatory.

(Table 1)

| $y_k^p = P(\hat{x}_k) + w_k^p$ | Prediction of the physics-based model |
|---|---|

(continued)

| | |
|---|---|
| $y_k^p = D\left(\hat{x}_k\right) + w_k^D$ | Prediction of the data-driven model |
| $\hat{x}_k = h(\hat{x}_k) + v_k$ | Pre-processed measurement |

(Table 2)

| Symbol | Name | Description |
|---|---|---|
| $X$ | state space | - |
| $k = 0,..., N$ | Index | - |
| $n$ | State vector dimension | - |
| $m$ | Prediction vector dimension | - |
| $x_k \in \Re^n$ | State vector | Discrete state variable |
| $\hat{x}_k$ | Observation | Measured state vector |
| $v_k$ | Observation error | Consists of measurement inaccuracy and representation error |
| $h$ | Data-pre-processing operator | e.g. normalization or scale |
| $D$ | Data-driven model operator | Data-driven prediction rule |
| $w_k^D$ | Data-driven model error | Systematical error, e.g. due to insufficient observations |
| $P$ | Physics based model operator | Physical prediction law |
| $w_k^P$ | Physics based model error | Systematical error, e.g. due to simplification |
| $y_k$ | Predicted state vector | Prediction |

There have to exist prediction rules as well as measurements of the observed system. The data-driven prediction needs to be based on measurable data. There is no other requirement of the data-driven model 205, meaning there is no specific data-driven building method required. The physics-based model 210 needs to cover state variables which are observational but not measurable. This so called Soft-Sensor also has no other requirement.

As there are different types of similar models, the discretization of the models is presumed. In present context, a first system A may be represented by first electric motor 110 and a second system B by second electric motor 140. As mentioned above, systems A and B should be similar but differ in at least one aspect, like the number of pole pairs in motors 110 and 140.

For further explanation, the following definitions are made:

(Table 3)

| | |
|---|---|
| $y_A^p = P_A\left(\hat{x}_A\right) + w_A^p$ | physics-based prediction of derivate A |
| $y_A^D = D_A\left(\hat{x}_A\right) + w_A^D$ | data-driven prediction of derivate A |
| $y_B^D = D_B\left(\hat{x}_B\right) + w_B^D$ | data-driven prediction of derivate B |

The purpose of the following information fusion is to use information generated by a fully observable system, System A, for a system which is not fully observable, System B, but similar to the observable system. Therefore an artificial intelligence like a neural network should be trained and validated such that it can generalize. This validated artificial intelligence shall be combined then with the not fully observable system to estimate exactly these not observable parameters based on the experience from similar systems.

(Table 4)

| $y_A^S = D\left(\hat{x}_A, y_A^P\right) + w_A^S$ | surrogate equation of physics based model A |
|---|---|
| $y_B^\gamma = \gamma\left(\hat{x}_B\right) + w_B^\gamma$ | prediction estimation of non-observable state variables of derivate B |

The prediction fusion operator 135 ($\gamma$) should be trained and validated like the Figure 1 shows.

Figure 3 shows using a foreign prediction fusion operator 135 on a second system 140. The representation of figure 3 may be considered as a flow diagram of a method or as a functional component of second apparatus 130. The observation vector $\hat{x}_k$ is fed into a first model 305, which is represented by above-mentioned surrogate equation of physics based model A (cf. table 3), and a second model 310, which is represented by above-mentioned data-driven prediction of derivate B (cf. table 4). Outputs from both models 305, 310 are then combined with the prediction fusion operator 135 ($\gamma$).

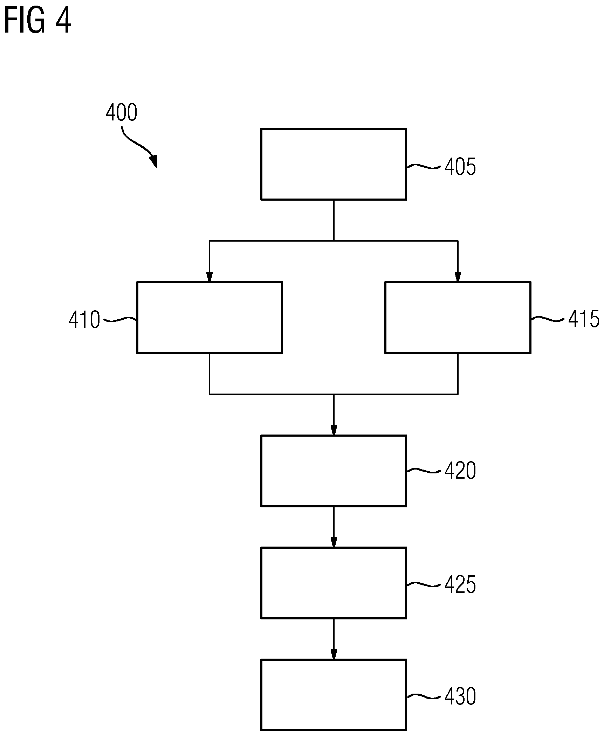

Figure 4 shows a first method 400 for generation of prediction fusion operator 135. In a first step 405, a first state vector is observed. In a second step 410, a prediction for the state vector is made on the basis of physical model 210 and in a step 415 another prediction for the state vector is made on the basis of data driven model 215. Steps 410 and 415 are preferred to run in parallel.

In steps 420 and 425 the prediction fusion operator 135 is trained and validated on the basis of the predictions from steps 410 and 415 and the actual values of the elements of the state vector as they become apparent. Training and validation in steps 420 and 425 is repeated a number of times on varying data.

The trained prediction fusion operator 135 may be provided in a step 430.

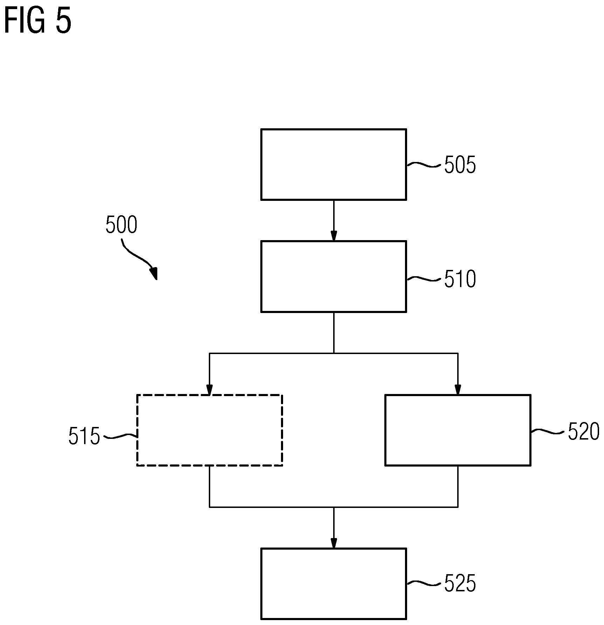

Figure 5 shows a second method 500 that may especially be used in conjunction with first method 400. In a step 505 a prediction fusion operator 135 from a foreign system 110 is accepted. Then a local state vector can be observed in a step 510. On the basis of the state vector, a prediction is made with a data driven model 205 in a step 520. Optionally, another prediction can be made in parallel with a physical model 210. The prediction and a surrogate of the physics based model A is then fed into prediction fusion operator 135 in a step 525, yielding a prediction of an extended state vector, comprising state variables of the second state vector of step 505 and at least one additional state variable. This excess state variable may comprise a pole shoe temperature on the second rotor 150 of second motor 140 in present example.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

**Claims**

1.  Method (400), the method comprising the following steps:

    - observing (405) a first state vector comprising state variables in a physical system A (110);
    - determining (415) a first prediction vector based on the first state vector, with a data driven model (205) for system A (110);
    - determining (410) a second prediction vector based on the first state vector, with a physics based model (210) for system A (110);
    - training (420) a prediction fusion operator (135) to determine a third prediction vector based on the first and second prediction vectors;
    - validating (425) the prediction fusion operator (135) on the third prediction vector and another first state vector, the other first state vector concerning the same time as the third prediction vector.

2.  Method (500), the method comprising the following steps:

    - observing (510) a second state vector comprising state variables in a physical system B (140) which is different from but similar to a physical system A (110);
    - determining (520) a fourth prediction vector based on the second state vector, with a data driven model (310) for system B (140);
- determining (515) a sixth prediction vector based on the second state vector, with a surrogate (305) of the physics based model (210); and
- determining (525) a fifth prediction vector based on the fourth and sixth prediction vectors, with a prediction fusion operator (135) that is based on the system A (110).

3. Method (400, 500) according to one of the previous claims, wherein the first prediction vector and the fourth prediction vector comprise the same state variables.

4. Method (400, 500) according to one of the previous claims, wherein systems A (110) and B (140) comprise mass producible items of different production series.

5. Apparatus (130) comprising:

   - a first interface (125) for accepting state variables of a physical system A (110);
   - processing (132) means for carrying out a method (400) according to one of claims 1, 3 or 4.

6. Apparatus (160) comprising:

   - a second interface (155) for accepting state variables of a physical system B (140);
   - processing means (162) for carrying out a method (500) according to one of claims 2 through 4.


**Amended claims in accordance with Rule 137(2) EPC.**

1. Method (400), the method comprising the following steps:

   - observing (405) a first state vector comprising state variables in a first electric motor (110);
   - determining (415) a first prediction vector based on the first state vector, with a data driven model (205) for the first motor (110);
   - determining (410) a second prediction vector based on the first state vector, with a physics based model (210) for the first motor (110);
   - training (420) a prediction fusion operator (135) to determine a third prediction vector based on the first and second prediction vectors;
   - wherein the prediction fusion operator (135) is implemented as a neural network;
   - validating (425) the prediction fusion operator (135) on the third prediction vector and another first state vector, the other first state vector concerning the same time as the third prediction vector.

2. Method (500), the method comprising the following steps:

   - observing (510) a second state vector comprising state variables in a second electric motor (140) which is different from but similar to the first electric motor (110);
   - determining (520) a fourth prediction vector based on the second state vector, with a data driven model (310) for the second electric motor (140);
   - determining (515) a sixth prediction vector based on the second state vector, with a surrogate (305) of the physics based model (210); and
   - determining (525) a fifth prediction vector based on the fourth and sixth prediction vectors, with a prediction fusion operator (135) that is determined based on the first electric motor (110) according to claim 1.

3. Method (400, 500) according to one of the previous claims, wherein the first prediction vector and the fourth prediction vector comprise the same state variables.

4. Method (400, 500) according to one of the above claims, wherein the motors (110, 140) are considered similar as long as they stem from the same motor design and differ only in product line and/or power declaration.

5. Apparatus (130) comprising:

   - a first interface (125) for accepting state variables of a first electric motor (110);

- processing (132) means for carrying out a method (400) according to one of the above claims.

6. Apparatus (160) comprising:

  - a second interface (155) for accepting state variables of a second electric motor (140);
  - processing means (162) for carrying out a method (500) according to one of claims 2 through 4.

FIG 1

FIG 2

EP 3 432 094 A1

FIG 3

FIG 4

400

405

410    415

420

425

430

FIG 5

Europäisches
Patentamt

European
Patent Office

Office européen
des brevets

# EUROPEAN SEARCH REPORT

**Application Number**

EP 17 18 2315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/208487 A1 (GOEBEL KAI FRANK [US] ET AL) 28 August 2008 (2008-08-28) * the whole document * ----- | 1-6 | INV. G05B17/02 G05B23/02 |
| | | | **TECHNICAL FIELDS SEARCHED (IPC)** G05B |

The present search report has been drawn up for all claims

| Place of search | Date of completion of the search | Examiner |
|---|---|---|
| The Hague | 18 January 2018 | Bassi, Luca |

EPO FORM 1503 03.82 (P04C01)

## ANNEX TO THE EUROPEAN SEARCH REPORT
## ON EUROPEAN PATENT APPLICATION NO.

EP 17 18 2315

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2018

| Patent document cited in search report | Publication date | Patent family member(s) | Publication date |
|---|---|---|---|
| US 2008208487 A1 | 28-08-2008 | NONE | |

EPO FORM P0459

For more details about this annex : see Official Journal of the European Patent Office, No. 12/82